# EUROPEAN PATENT SPECIFICATION

(11) **EP 2 711 242 B1**
(45) Date of publication and mention of the grant of the patent: **10.02.2016**
(21) Application number: 13185461.4
(22) Date of filing: 20.09.2013
(51) Int. Cl.: B60N 2/36

(54) **Latch for a seat of a motor vehicle**
Verriegelung für Kraftfahrzeugsitze
Dispositif de blocage pour un siège de véhicule automobile

(30) Priority: 21.09.2012 IT TO20120822
(43) Date of publication of application: 26.03.2014
(73) Proprietor: Magna Closures S.p.A., Collesalvetti (IT)
(72) Inventor: Cumbo, Francesco, 56100 Pisa (IT); Bigazzi, Luca, 56038 Ponsacco (IT)
(74) Representative: Di Sciuva, Michele

(56) References cited:
- EP-A1- 1 138 547
- EP-A1- 2 141 312
- EP-A2- 0 397 333
- EP-A2- 2 067 917
- WO-A1-01/94148
- WO-A1-2012/152363
- FR-A1- 2 930 581
- KR-A- 20090 109 682

## Description

The present invention relates a latch for a seat of a motor vehicle and to a method of operating that latch.

As is known, motor vehicles may comprise a passenger area and a cargo area which are separated from each other by one or more passenger seats, typically rear passenger seats.

Those rear passenger seats substantially comprise a fixed seat base and a seatback which is pivotally hinged relative to the seat.

Foldable rear passenger seats are also known which can be selectively moved between:
- a raised position in which the seatback is upright, so as to separate the passenger area from the cargo area; and
- a lowered position in which the seatback is folded over the seat part, so as to provide access from the passenger area to the cargo area.

In order to lock the foldable rear passenger seat in the raised position, the motor vehicle comprises:
- a striker fixed to a frame; and
- a closure assembly cooperating with the striker and carried by the seatback of the seat.

More in detail, the closure assembly comprises:
- a ratchet which defines an open cylindrical seat; and
- a pawl.

The ratchet is elastically loaded towards an opening position in which the ratchet enables engagement and disengagement between the striker and the seat of the ratchet. Furthermore, the ratchet is rotatably movable between the opening position and a closing position, in which the ratchet holds the striker and prevents the disengagement of the striker from the closure assembly.

The pawl can be elastically loaded towards the ratchet for keeping the ratchet in the closing position and the pawl may be moved away from the ratchet, so as to allow the ratchet to elastically return to the opening position.

More in detail, the passenger seat is locked in the raised position by raising the passenger seat in such a way that the striker engages the seat of the ratchet and causes the movement of the ratchet from the opening position to the closing position.

When it is desired to move the passenger seat to the lowered position, the user may operate a control lever which is operatively connected with the pawl. In particular, the control lever, when operated, moves the pawl away from the ratchet, allowing the ratchet to reach the opening position.

When the passenger seat is in the raised position and, therefore, the ratchet is in the closing position, the above described closing assembly can generate annoying noises, especially when the motor vehicle is driven on irregular roads, so causing a continuous vibration of the seatback.

These noises can result from the passenger seat vibrations preventing the ratchet and the pawl from remaining firmly in contact with one another in the closing position. In particular, the passenger seat vibration can cause oscillations of the ratchet around the closed position.

In these oscillations, the ratchet, when set in the closing position, repeatedly moves away from the pawl along a so-called "over-travel" stroke and then periodically hits the pawl, thus producing a rattling contact noise.

In order to reduce this noise, it has been proposed to provide the ratchet and the pawl with bumpers which reduce the over-travel of the ratchet.

However, the damping properties of these bumpers are heavily affected by variation of temperature and are not constant during the life cycle of the closure assembly because the elastomeric material of the bumpers has a certain degree of hysteresis.

In order to reduce the rattling contact noise, a closing assembly has been proposed in KR-A-2009109682, which comprises a lock plate which keeps the ratchet in contact against the pawl and the striker, thus preventing the ratchet set in the closing position from oscillating towards and away from the pawl.

In greater detail, the pawl cooperates with a first tooth of the ratchet and the lock plate cooperates with a second tooth of the ratchet, in the closing position.

The first tooth is arranged upstream of the second tooth, proceeding along the rotation sense of the ratchet from the opening position to the closing position.

As the first tooth is arrested by the pawl in the closing position, the ratchet can move beyond the pawl for a very narrow arch in the stroke from the opening position to the closing position.

As a result, the action exerted by the pawl on the ratchet in the closing position in not optimal, thus generating the risk that the ratchet may return to the opening position due, for example, to the vibration on the latch.

A need is therefore felt in the sector to reduce the noise deriving from the hitting of the pawl against the ratchet, while leaving the ratchet the possibility of moving beyond the pawl for a certain arch, when moving from the opening position to the closing position.

KR-A-2009109682 discloses a latch according to the preamble of claim 1, or a method of operating a latch according to the preamble of claim 14.

It is therefore an object of the present invention to provide a latch for a seat of a motor vehicle, designed to meet at least one of the aforementioned needs.

This object is achieved by a latch for a seat of a motor vehicle, as claimed in claim 1.

The present invention also relates to a motor vehicle including said latch, as claimed in claim 13.

Furthermore, the present invention relates to a method for operating a latch for a seat of a motor vehicle, as claimed in claim 14.

A preferred, non-limiting embodiment of the present invention will be described by way of example with reference to the accompanying drawings, in which:
Figures 1 to 3 are a frontal view of an example embodiment of a latch according the present invention in subsequent positions between an opening position and a closing position thereof;
Figure 4 is a frontal view of the latch of Figures 1 to 3 in a closing position;
Figure 5 is an exploded view of the latch of Figures 1 to 4;
Figure 6 is a perspective of the latch of Figures 1 to 5;
Figure 7 is a perspective of a passenger seat of a motor vehicle, which interacts with the latch of Figures 1 to 6;
Figure 8 is a lateral view of the passenger seat of Figure 7 and of the latch of Figures 1 to 7 in the closing position; and
Figure 9 is a lateral view of the passenger seat of Figure 7 and of the latch of Figures 1 to 7 in the opening position.

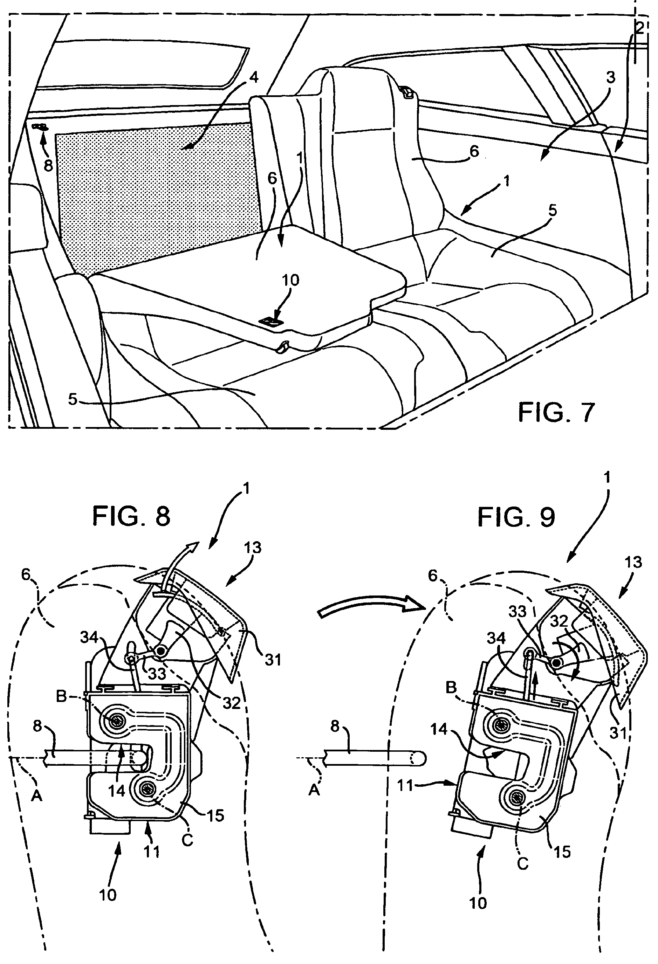

Number 1 in Figures 7 to 9 indicates as a whole a pair of passenger seats for a motor vehicle 2 (only partially shown in Figure 7).

Motor vehicle 2 comprises a passenger area 3 and a cargo area 4.

In detail, each seat 1 comprises a seat part 5 and a seatback 6, which is articulated to seat part 5, for example by means of a hinge.

Each seat 1 may be selectively set in:
- a raised position in which seatback 6 is upright, so as to prevent a direct and easy access from passenger area 3 to cargo area 4; and
- a lowered position in which seatback 6 is folded over seat part 5, so as to provide an easy and direct access from passenger area 3 to cargo area 4.

Each seatback 6 further comprises a latch 10 which is selectively operated to fix seatback 6 in the upright position.

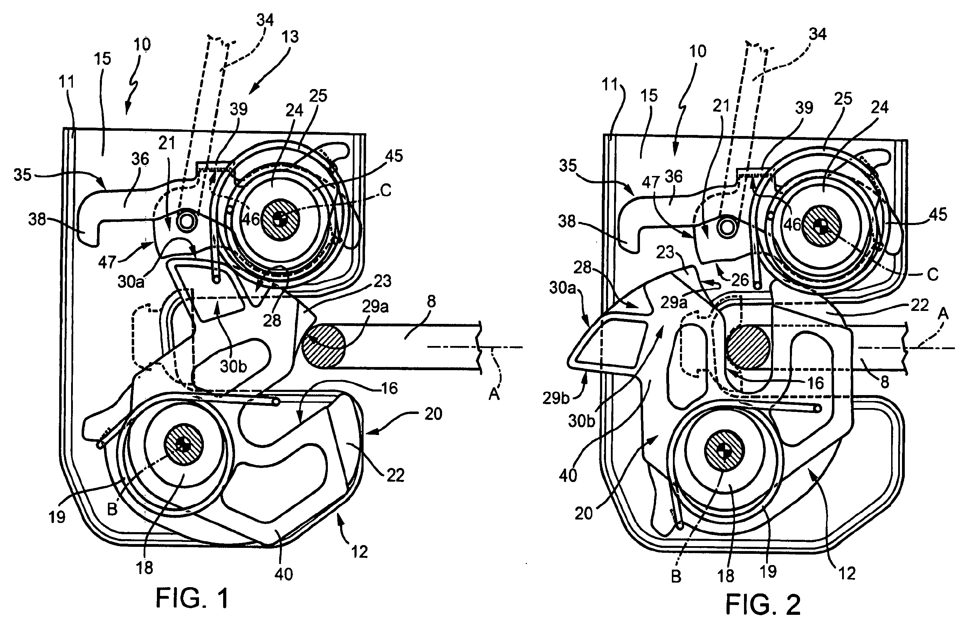

Latch 10 substantially comprises (Figures 1 to 6):
- a supporting body 11 fixed in known manner to seatback 6;
- a closure assembly 12 carried by supporting body 11 and adapted to releasably engage a striker 8 (only partially shown in Figures 1 to 6) integrally carried to a fixed part of motor vehicle 1; and
- an opening assembly 13 which may operated by an user to disengage striker 8 from closure assembly 12. Furthermore, supporting body 11 substantially comprises:
- a plate 15 fixed to seatback 6 and closure assembly 12, and which has a U-shaped open seat 14 for allowing the interaction of striker 8 with closure assembly 12; and
- a hollow shell 17 fixed to plate 15 and housing closure assembly 12.

In particular, plate 15 closes shell 17 on one lateral side thereof.

Closure assembly 12 substantially comprises:
- a ratchet 20 hinged to plate 15 about an axis B orthogonal to the plane on which plate 15 lies; and
- a pawl 21 hinged to plate 15 about an axis C orthogonal to the plane on which plate 15 lies, and parallel to and staggered from axis B.

In particular, direction A is orthogonal to axes B, C.

More precisely, ratchet 20 comprises a seat/opening 16, U-shaped in the embodiment shown, bounded by a pair of teeth 22, 23 and configured for receiving striker 8.

Furthermore, ratchet 20 is loaded by a spring 19 towards an opening position, in which said seat/opening 16 faces a direction A along which striker 8 may enter or exit that opening 16.

Spring 19 is interposed between plate 15 and ratchet 20 and is, in the embodiment shown, a spiral spring wound about axis B.

In particular, spring 19 is wound about a pin 18 which extends about axis B.

Under the action of striker 8 and as a result of the raising of seatback 6 towards the upright position, ratchet 20 rotates, when moving from the opening position to a closing position in an anticlockwise rotation direction (with reference to Figures 1 to 4), about axis B.

In particular, ratchet 20 comprises:
- a main body which defines teeth 22, 23 and seat/openig 16; and
- an overmoulding 40 which defines slot 28.

Tooth 23 is bounded by:
- a lateral surface 29a arranged on the side of tooth 22 and bounding seat 16;
- a lateral surface 29b opposite to surface 29a;
- a curved front surface 30a interposed between surfaces 29a, 29b and parallel to axis B; and
- a surface 30b orthogonal to axis B and to surface 30a and interposed between surfaces 29a, 29b.

Slot 28 is arranged on the opposite side of tooth 23 relative to seat/opening 16.

Slot 28 is, in the embodiment shown, V-shaped, and is open radially to axis B and on the opposite side of axis B.

Slot 28 is defined by a region of over-moulding 40 attached over surface 30b of tooth 23.

Pawl 21 is loaded by a spring 25 towards a surface 30a of ratchet 20.

In the embodiment shown, tooth 23 is arranged downstream of tooth 22, proceeding from the opening position to the closing position of ratchet 20, in the anticlockwise direction with reference to Figures 1 to 4.

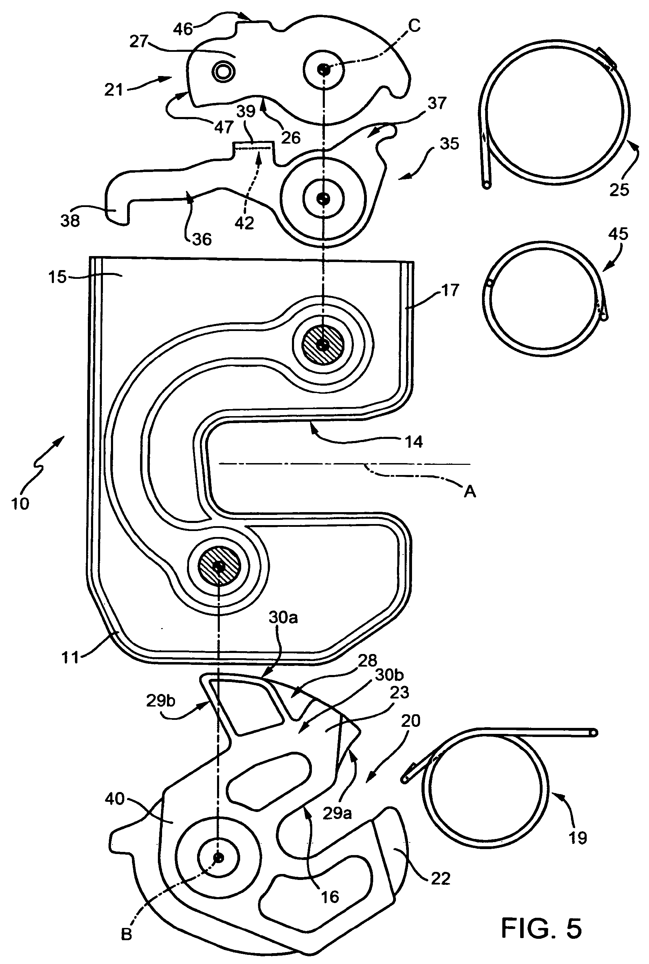

Furthermore, pawl 21 is bounded by (Figure 5):
- a surface 27 orthogonal to axis C and connected to opening assembly 13;
- a surface 26 orthogonal to surface 27;
- a step 46 opposite to surface 26 and orthogonal to surface 27; and
- a surface 47 defining with surface 26 a corner of pawl 21, which extends parallel to axis C.

In detail, when ratchet 20 rotates about axis B from the opening position to the closing position in the anticlockwise rotation direction, at first, surface 30a of tooth 23 slides onto surface 26 of pawl 21 (Figure 1) and, then, tooth 23 moves beyond pawl 21 (Figure 2).

At this stage, spring 19 causes the rotation of ratchet 20 about axis B in a clockwise rotation direction (with reference to Figures 1 to 4) and pawl 21 is rotated in the anticlockwise direction, up to reach a position in which surface 29a of tooth 23 abuts against surface 47 of pawl 21.

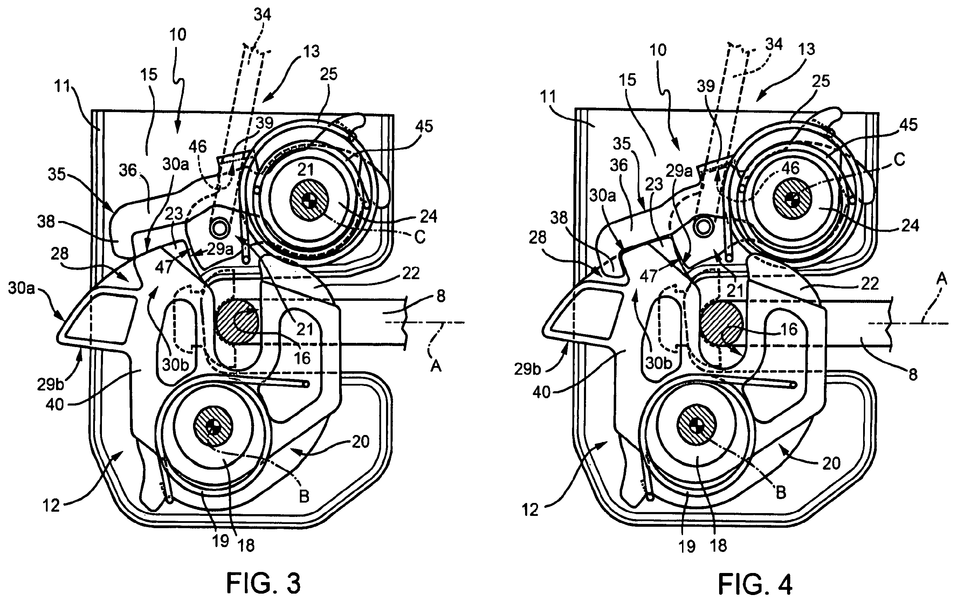

At this stage, ratchet 20 reaches the closing position (Figure 4) and tooth 22 prevents striker 8 from exiting seat/opening 16.

In particular, when ratchet 20 is in the closing position, surface 47 of pawl 21 cooperates with surface 29a of tooth 23, so as to releasably lock ratchet 20 in the closing position

As a result of the action of opening assembly 13 onto surface 27, pawl 21 rotates, against the action of spring 25, about axis C in the clockwise rotation direction along a disengagement stroke from ratchet 20 up to reach a position in which tooth 23 is detached from surface 47 of pawl 21, and ratchet 20 is free to move towards the opening position (Figure 1) under the action of spring 25 in the clockwise rotation direction.

Spring 25 is interposed between plate 15 and pawl 21 and is, in the embodiment shown, a spiral spring wound about axis C.

In particular, spring 25 is wound about a pin 24 which extends about axis B.

Opening assembly 13 substantially comprises (Figures 8 and 9);
- a hollow carter 31, which is fixed to seatback 6;
- a lever 32 fixed to surface 27 and adapted to be operated by an user;
- a lever 33 connected to lever 32; and
- an arm 34 connected to surface 26 of pawl 21.

Latch 10 also comprises a lever 35 which can be moved between:
- a first position in which it is coupled with slot 28 for blocking ratchet 20 in the closing position (Figures 2 and 3), so as to substantially prevent or limit the over-travel of ratchet 20 in the closing position; and
- a second position in which it is detached from slot 28, so as to allow ratchet 20 to over-travel when arranged in the closing position (Figure 1).

Advantageously, according to the invention as defined in claim 1 or 14, lever 35 and pawl 21 cooperate with the same tooth 23 of ratchet 20, when ratchet 20 is set in the closing position (Figure 4).

In detail, a portion 38 of lever 35 engages slot 28 and surface 47 of pawl 21 cooperates with surface 29a of tooth 23, when ratchet 20 is set in the closing position and lever 35 is in the first position.

In this way, when ratchet 20 reaches the closing position, tooth 23 is firmly kept, on its opposite sides, between surface 47 of pawl 21 and portion 38 of lever 35.

According to the invention, lever 35 is movable from the first position and the second position integrally and together with pawl 21, when pawl 21 moves away from ratchet 20 as a result of the operation of opening assembly 13.

In other words, lever 35 moves substantially along the same trajectory of pawl 21, when pawl 21 moves away from ratchet 20 a result of the operation of opening assembly 13.

In particular, the above trajectory is shaped as an arc of circumference having centre on axis C.

In greater detail, lever 35 is hinged about axis C and is, therefore, coaxial with pawl 21.

Lever 35 further comprises, on opposite sides of axis C, (Figure 5):
- an arm 36 which defines portion 38 adapted to engage slot 28 in the first position of lever 35; and
- an arm 37.

In the embodiment shown, portion 38 defines an end of arm 36 opposite to axis C and is hook-shaped and is eccentric relative to axis C.

Furthermore, arm 36 comprises protrusion 39 which defines an abutting surface 42 (Figure 9) for step 46 of pawl 21, when the latter moves away from ratchet 20.

Arms 36, 37 lie on a plane orthogonal to axis C and protrusion 39 protrudes from arm 36 parallel to axis C.

In particular, arms 36, 37 lie on a plane which is staggered from pawl 21 along axis C.

Protrusion 39 is interposed between axis C and portion 38.

Latch 10 also comprises a spring 45 which is interposed between plate 15 and an anchoring portion of lever 35.

Spring 45 loads lever 35 towards a position in which portion 38 engages slot 28.

Spring 45 is wound about axis C and is coaxial with spring 25.

In the embodiment shown, spring 45 is a spiral spring and is wound onto pin 24.

As a result of the action of opening assembly 13 onto surface 27, surface 47 of pawl 21, when rotating about axis C along the disengagement stroke in the anticlockwise rotation direction, thrusts protrusion 39 away from ratchet 20, against the action of spring 45.

In this way, portion 38 leaves free slot 28, thus allowing ratchet 20 to return back to the opening position.

The radial distance of portion 38 form axis C is greater than the radial distance of surface 47 from axis C.

In this way, when ratchet 20 rotates about axis B, starting from the opening position,:
- at first, surface 47 of pawl 21 contacts surface 29a of tooth 23 (Figure 3), under the action of spring 25; and
- afterwards portion 38 of lever 35 engages slot 28 of ratchet 20 (Figure 4), under the action of spring 47.

Furthermore, when ratchet 20 moves from the closing position to opening position,:
- at first, portion 38 of lever 35 disengages slot 28 of ratchet 20; and
- afterwards surface 47 of pawl 21 moves away from surface 29a of tooth 23.

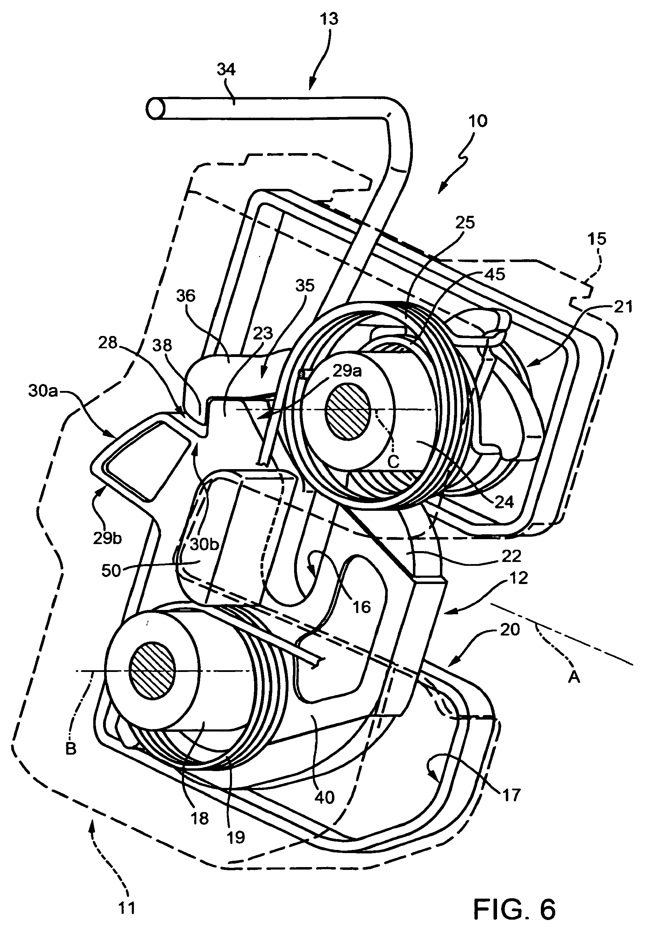

Shell 17 also comprises (Figure 6) a bumper 50 made in elastomeric material and arranged orthogonally to seat/opening 16.

Bumper 50 is parallel to seat 16 of ratchet 10, when ratchet 20 is in the closing position.

The operation of latch 10 is described in the following of the present description, starting from a configuration in which seat 1 is in the lowered position, i.e. a configuration in which seatback 6 is folded over seat part 5.

In this configuration, ratchet 20 is loaded by spring 19 in the opening position in which seat/opening 16 is not engaged by striker 8 and seat 16 is open parallel to direction A.

Furthermore, pawl 21 is in a decoupled position, i.e. is detached from surface 29a of tooth 23 and keeps, due to the abutment between surface 42 of protrusion 39 and step 46 of pawl 21, lever 35 in the second position.

Starting from this configuration, the user raises seatback 6 up to the upright position.

As a result of this movement, striker 8 causes the rotation about axis B of ratchet 20 in the anticlockwise rotation direction.

During this rotation stroke, at first surface 29a of tooth 23 slides on surface 26 of pawl 21 (Figure 2). Then, tooth 23 moves beyond pawl 21 in the anticlockwise rotation direction (Figure 2), thus allowing pawl 21 to move, under the action of spring 25, towards ratchet 20 (Figure 3) in the anticlockwise rotation direction.

At this stage, surface 47 of pawl 21 faces surface 29a of tooth 23 (Figure 3).

The action of spring 19 causes the rotation of ratchet 20 in the clockwise rotation direction up to reach the closing position thereof, in which surface 29a of tooth 23 cooperates with surface 47 of pawl 21 and pawl 21 is in a coupled position. Furthermore, ratchet 20 is in the closing position.

In other words, ratchet 20 may oscillate towards and away from pawl 21 for a certain arch, when ratchet 20 is in the closing position and lever 35 is in the second position (Figures 2 and 3).

Slightly after pawl 21 has assumed a position in which surface 47 of pawl 21 faces surface 29a of tooth 23, lever 35 reaches, under the action of spring 45, the first position, in which portion 38 engages slot 28 (Figure 4).

At this stage, tooth 23 is blocked, on the side of seat/opening 16 by pawl 21 and, on the opposite side of said opening 16, by lever 35.

As a result, ratchet 20 is substantially prevented from oscillating towards and away from pawl 21, when ratchet 20 is in the closing position and lever 35 is in the first position (Figure 4).

In other words, lever 35, when set in the first position, prevents ratchet 20 from moving along an over-travel stroke or at least limit the over-travel stroke, when ratchet 20 is arranged in the closing position.

Seat 6 is selectively displaced by the user in the lowered position, by simply acting on opening assembly 13 in such a way that lever 34 and, therefore, pawl 21 are moved away from ratchet 20.

In greater detail, lever 34 causes the rotation of pawl 21 against the action of spring 25 along the disengagement stroke from ratchet 20 and in a clockwise rotation direction about axis C, with reference to Figures 1 to 4.

When pawl 21 rotates along the disengagement stroke about axis C and in the clockwise rotation direction, step 46 of pawl 21 thrusts protrusion 39 of lever 35 away from ratchet 20 and against the action of spring 45.

As a result, ratchet 20 rotates about axis B in the clockwise rotation direction about axis C, with reference to Figures 1 to 4.

As a result of the simultaneous rotation of pawl 21 and lever 35 about axis C and away from ratchet 20, surface 47 of pawl 21 is detached from surface 29a of ratchet 20 and portion 38 of lever 35 disengages slot 28 of ratchet 20.

Ratchet 20 is at this stage free to rotate (in the clockwise rotation direction with reference to Figures 1 to 4) towards the opening position, under the action of spring 19.

When ratchet 20 reaches the opening position shown in Figure 1, striker 8 disengages seat 16 of latch 10 and seat 6 can be freely moved by the user in the lowered position.

The advantages of latch 10 according to the present invention will be clear from the foregoing description.

In particular, lever 35 and pawl 21 cooperate with the same tooth 23, when ratchet 20 is in the closing position (Figure 4).

As a result, when it is in the closing position, the movement of ratchet 20 away from and towards pawl 21 is substantially prevented or at least limited. In other words, the over-travel of ratchet 20 in the closing position is substantially prevented when lever 35 is in the first position, thus avoiding the generation of the resulting rattling metal noise.

Furthermore, tooth 23 moves beyond pawl 21 for a certain arch about axis A in the anticlockwise rotation direction (Figures 2 and 3), when ratchet 20 is in the closing position and lever 35 is in the second position.

In other words, latch 10 provides for a certain over-travel of ratchet 20, when lever 35 is in the second position.

Accordingly, due to the fact that tooth 23 remains sandwiched between lever 35 and pawl 21, the action exerted of pawl 21 is highly effective in preventing any spontaneous opening of the ratchet 20.

Furthermore, when opening assembly 13 is actuated, lever 35 moves away from ratchet 20 integrally and together with pawl 21.

In this way, ratchet 20 reaches the opening position immediately after opening assembly 13 is operated while, at the same time, reducing the noise deriving from the repeated hitting of ratchet 20 against pawl 21.

Furthermore, the radial distance between portion 38 of lever 35 and axis C is greater than the radial distance between pawl 21 and axis C.

Accordingly, when ratchet 20 rotates about axis B, starting from the opening position,:
- at first surface 47 of pawl 21 contacts surface 29b of tooth 23 (Figure 3), under the action of spring 25; and
- afterwards portion 38 of lever 35 engages slot 28 of ratchet 20 (Figure 4), under the action of spring 45.

For the same reasons, when ratchet 20 moves from the closing position to opening position,:
- at first portion 38 of lever 35 disengages slot 28 of ratchet 20, against the action of spring 45; and
- afterwards surface 47 of pawl 21 moves away from surface 29a of tooth 23, against the action of spring 25.

Lever 35 and pawl 21 are mounted on same pin 24, thus reducing the number of components required by latch 30.

Finally, although the striker 8 is described and shown as carried by the fixed part of motor vehicle 2, and the latch 10 is described and shown as fixed to the seatback 6, the latch 10 can be fixed to the fixed part of the motor vehicle 2 with the striker 8 fixed to the seatback 6.

## Claims

1. A latch (10) for a seat (1) of a motor vehicle (2), comprising a closing assembly (12) adapted to cooperate with a latch striker (8); said closing assembly (12) comprising:
- a ratchet (20) which can assume an opening position, in which said ratchet (20) enables engagement and disengagement between said latch striker (8) and an opening (16) of said ratchet (20), and a closing position, in which said ratchet (20) holds said latch striker (8) within said opening (16); said ratchet (20) comprising a first and a second tooth (22, 23) bounding said opening (16) on respective opposite sides of said opening (16);
- a pawl (21) movable about an axis (C) between a decoupled position in which said pawl (21) permits the movement of said ratchet (20) from said closing position to said opening position, and a coupled position, in which said pawl (21) is coupled with said ratchet (20) for keeping said ratchet (20) in said closing position and preventing disengagement of said striker (8) from said opening (16); and
- a lever (35) which can be moved between:
a first position, in which said lever (35) is coupled with said ratchet (20) to block said ratchet (20) in said closing position, so as to limit over-travel movement of said ratchet (20) away from the pawl (21), when said ratchet (20) is set in the closing position; and
a second position in which said lever (35) is decoupled from said ratchet (20), so as to allow said ratchet (20) to over-travel in said closing position;
**characterized in that** said lever (35) and said pawl (21) cooperate with a same second tooth (23) of said ratchet (20), when said ratchet (20) is arranged in said closing position;
said second tooth (23) comprising:
- a first surface (29a), which laterally bounds said opening (16) and cooperates with said pawl (21) when said ratchet (20) is arranged, in use, in said closing position; and
- a slot (28) which is engaged by said lever (35), when said lever (35) is arranged in said first position and said ratchet (20) is arranged, in use, in said closing position;
said slot (28) being arranged downstream of said surface (29a) proceeding according to the advancing rotation direction of said ratchet (20) from said opening position to said closing position;
said slot (28) being defined by a second surface (30b) of said second tooth (23).

2. The latch of claim 1, **characterized in that** said first tooth (22) is adapted for blocking said ratchet (20) in said closing position.

3. The latch of claim 1 or 2, **characterized in that** said second surface (30b) of said second tooth (23) is transversal to said first surface (29a).

4. The latch of any one of the foregoing claims, **characterized in that** said ratchet (20) comprises an overmoulding (40) which defines said slot (28).

5. The latch of any one of the foregoing claims, **characterized in that** said lever (35) is movable from said first position to said second position integrally and together with said pawl (21), when said pawl (21) moves away, in use, from said ratchet (20).

6. The latch of claim 5, **characterized in that** said lever (35) is movable in a plane between said first position and said second position;
said lever (35) comprising:
- a main body (36) lying in said plane and comprising a portion (38) which is adapted to cooperate with said slot (28) of said ratchet (20) when said ratchet (20) is set in said closing position; and
- a protrusion (39) protruding from said main body (36) transversally to said plane and defining an abutting surface (42) for said pawl (21), when said pawl (21) moves, in use, away from said ratchet (20) arranged in said closing position.

7. The latch of claim 6, **characterized in that** said portion (38) of the main body (36) defines a free end (38) of said lever (35) and is shaped as a hook, which is eccentric relative to said axis (C).

8. The latch of claims 6 or 7, **characterized in that** said lever (35) is rotatable about said axis (C); and **in that** said protrusion (39) is interposed between said axis (C) and said free end (38).

9. The latch of any one of claims 6 to 8, **characterized in that** said pawl (21) is arranged on one side of and at a certain distance from said main body (36).

10. The latch of any one of claims 7 to 9, **characterized in that** said free end (38) extends at a first radial distance from said axis (C);
said pawl (21) having a surface (47) cooperating with said tooth (23) of said ratchet (20) in said closing position thereof;
said surface (47) extending at a second radial distance from said axis (C), which is smaller than said first radial distance.

11. The latch of claim 10, **characterized by** comprising:
- first elastic means (45) for elastically loading said lever (35) towards said first position; and
- second elastic means (25) for elastically loading said pawl (21) towards said ratchet (20);
and/or in that said pawl (21) and said lever (35) are rotatable about same said axis (C).

12. The latch according to claim 11, **characterized by** comprising a frame, which, in turn, comprises a bush (24) which extends about said same axis (C);
said pawl and said lever (21, 35) being rotatably supported by said bush (24) about said same axis (C).

13. Motor vehicle (2), comprising:
- a seat (1) selectively movable between a folded position and a raised position;
- a latch (10) according to any one of the foregoing claims;
- said striker (8) adapted to be withheld within said opening (16) of said ratchet (20) arranged in said closing position, when said seat (1) is arranged in one of said folded position and said raised position; and
- a control mechanism (13) which may be selectively actuated to move away said pawl (21) and, therefore, said lever (35) from said ratchet (20), thus allowing said ratchet (20) to assume said opening position and said seat (1) to be arranged in the other one of said folded position and said raised position.

14. A method of operating a latch (10) for a seat (1) of a motor vehicle (2) comprising the steps of:
- moving a ratchet (20) of said latch (10) from an opening position, in which said ratchet (20) enables engagement with and disengagement from a striker (8) and an opening (16) of said ratchet (20), and a closing position, in which said ratchet (20) holds said striker (8) within said opening (16), said ratchet (20) comprising a first and a second tooth (22, 23) bounding said opening (16) on respective opposite sides of said opening (16);
- moving a pawl (21) about an axis (C) between a decoupled position in which said pawl (21) permits the movement of said ratchet (20) from said closing position to said opening position, and a coupled position, in which said pawl (21) is coupled with said ratchet (20) for keeping said ratchet (20) in said closing position and preventing disengagement of said striker (8) from said opening (16); and
- moving a lever (35) between a first position, in which said lever (35) is coupled with said ratchet (20) to block said ratchet (20) in said closing position, so as to limit over-travel movement of said ratchet (20) away from the pawl (21); and a second position in which said lever (35) is decoupled from said ratchet (20), so as to allow said ratchet (20) to over-travel in said closing position;
**characterized by** comprising the step of controlling said lever (35) and said pawl (21) in such a way that said lever (35) and said pawl (21) cooperate with the same second tooth (23) of said ratchet (20), when said ratchet (20) is arranged in said closing position;
said second tooth (23) comprising:
- a first surface (29a), which laterally bounds said opening (16) and cooperates with said pawl (21) when said ratchet (20) is arranged, in use, in said closing position; and
- a slot (28) which is engaged by said lever (35), when said lever (35) is arranged in said first position and said ratchet (20) is arranged, in use, in said closing position;
said slot (28) being arranged downstream of said surface (29a) proceeding according to the advancing rotation direction of said ratchet (20) from said opening position to said closing position;
said slot (28) being defined by a second surface (30b) of said second tooth (23).

## Patentansprüche

1. Verriegelung (10) für einen Sitz (1) eines Kraftfahrzeugs (2), die eine Schließanordnung (12) aufweist, die geeignet ist, mit einem Verriegelungsbolzen (8) zusammenzuwirken; wobei die Schließanordnung (12) aufweist:
eine Sperre (20), die eine Öffnungsposition, in der die Sperre (20) Einrücken und Ausrücken zwischen dem Verriegelungsbolzen (8) und einer Öffnung (16) der Sperre (20) ermöglicht, und eine Schließposition einnehmen kann, in der die Sperre (20) den Verriegelungsbolzen (8) in der Öffnung (16) hält; wobei die Sperre (20) einen ersten und einen zweiten Zahn (22, 23) aufweist, die die Öffnung (16) auf jeweiligen Gegenseiten der Öffnung (16) begrenzen;
eine Klinke (21), die um eine Achse (C) beweglich ist zwischen einer entkoppelten Position, in der die Klinke (21) die Bewegung der Sperre (20) aus der Schließposition in die Öffnungsposition ermöglicht, und einer gekoppelten Position, in der die Klinke (21) mit der Sperre (20) gekoppelt ist, zum Halten der Sperre (20) in der Schließposition und Verhindern von Ausrücken des Bolzens (8) aus der Öffnung (16); und
einen Hebel (35), der bewegt werden kann zwischen:
einer ersten Position, in der der Hebel (35) mit der Sperre (20) gekoppelt ist, um die Sperre (20) in der Schließposition zu blockieren, um so Überlaufbewegung der Sperre (20) weg von der Klinke (21) zu begrenzen, wenn die Sperre (20) in der Schließposition eingestellt ist; und
einer zweiten Position, in der der Hebel (35) von der Sperre (20) entkoppelt ist, um so der Sperre (20) zu ermöglichen, Überlauf in der Schließposition zu vollführen;
**dadurch gekennzeichnet, dass** der Hebel (35) und die Klinke (21) mit einem selben zweiten Zahn (23) der Sperre (20) zusammenwirken, wenn die Sperre (20) in der Schließposition angeordnet ist;
wobei der zweite Zahn (23) aufweist:
eine erste Oberfläche (29a), die die Öffnung (16) seitlich begrenzt und mit der Klinke (21) zusammenwirkt, wenn die Sperre (20) im Gebrauch in der Schließposition angeordnet ist; und
einen Schlitz (28), in den der Hebel (35) einrückt, wenn der Hebel (35) in der ersten Position angeordnet ist und die Sperre (20) im Gebrauch in der Schließposition angeordnet ist;
wobei der Schlitz (28) nach der Oberfläche (29a) gemäß der Vorwärtsdrehrichtung der Sperre (20) aus der Öffnungsposition in die Schließposition angeordnet ist; und
der Schlitz (28) durch eine zweite Oberfläche (30b) des zweiten Zahns (23) gebildet ist.

2. Verriegelung nach Anspruch 1, **dadurch gekennzeichnet, dass** der erste Zahn (22) zum Blockieren der Sperre (20) in der Schließposition geeignet ist.

3. Verriegelung nach Anspruch 1 oder 2, **dadurch gekennzeichnet, dass** die zweite Oberfläche (30b) des zweiten Zahns (23) quer zur ersten Oberfläche (29a) ist.

4. Verriegelung nach einem der vorstehenden Ansprüche, **dadurch gekennzeichnet, dass** die Sperre (20) eine Überformung (40) aufweist, die den Schlitz (28) bildet.

5. Verriegelung nach einem der vorstehenden Ansprüche, **dadurch gekennzeichnet, dass** der Hebel (35) aus der ersten Position in die zweite Position in einem Stück und zusammen mit der Klinke (21) beweglich ist, wenn sich die Klinke (21) im Gebrauch von der Sperre (20) wegbewegt.

6. Verriegelung nach Anspruch 5, **dadurch gekennzeichnet, dass** der Hebel (35) in einer Ebene zwischen der ersten Position und der zweiten Position beweglich ist; wobei der Hebel (35) aufweist:
einen Hauptkörper (36), der in der Ebene liegt und einen Abschnitt (38) aufweist, der geeignet ist, mit dem Schlitz (28) der Sperre (20) zusammenzuwirken, wenn die Sperre (20) in der Schließposition eingestellt ist; und
einen Vorsprung (39), der vom Hauptkörper (36) quer zur Ebene vorsteht und eine Anlagefläche (42) für die Klinke (21) bildet, wenn sich die Klinke (21) im Gebrauch von der in der Schließposition angeordneten Sperre (20) wegbewegt.

7. Verriegelung nach Anspruch 6, **dadurch gekennzeichnet, dass** der Abschnitt (38) des Hauptkörpers (36) ein freies Ende (38) des Hebels (35) bildet und als Haken geformt ist, der relativ zur Achse (C) außermittig ist.

8. Verriegelung nach Anspruch 6 oder 7, **dadurch gekennzeichnet, dass** der Hebel (35) um die Achse (C) drehbar ist; und dadurch, dass der Vorsprung (39) zwischen der Achse (C) und dem freien Ende (38) eingefügt ist.

9. Verriegelung nach einem der Ansprüche 6 bis 8, **dadurch gekennzeichnet, dass** die Klinke (21) auf einer Seite des Hauptkörpers (36) und in einem gewissen Abstand davon angeordnet ist.

10. Verriegelung nach einem der Ansprüche 7 bis 9, **dadurch gekennzeichnet, dass** sich das freie Ende (38) in einer ersten Radialentfernung von der Achse (C) erstreckt;
wobei die Klinke (21) eine Oberfläche (47) hat, die mit dem Zahn (23) der Sperre (20) in deren Schließposition zusammenwirkt; und
sich die Oberfläche (47) in einem zweiten Radialabstand von der Achse (C) erstreckt, der kleiner als der erste Radialabstand ist.

11. Verriegelung nach Anspruch 10, **dadurch gekennzeichnet, dass** sie aufweist:
eine erste elastische Einrichtung (45) zum elastischen Spannen des Hebels (35) zur ersten Position; und
eine zweite elastische Einrichtung (25) zum elastischen Spannen der Klinke (21) zur Sperre (20);
und/oder dadurch, dass die Klinke (21) und der Hebel (35) um dieselbe Achse (C) drehbar sind.

12. Verriegelung nach Anspruch 11, **dadurch gekennzeichnet, dass** sie einen Rahmen aufweist, der seinerseits eine Buchse (24) aufweist, die sich um dieselbe Achse (C) erstreckt;
wobei die Klinke und der Hebel (21, 35) durch die Buchse (24) um dieselbe Achse (C) drehbar gelagert sind.

13. Kraftfahrzeug (2), das aufweist:
einen Sitz (1) der zwischen einer umgeklappten Position und einer hochgestellten Position selektiv beweglich ist;
eine Verriegelung (10) nach einem der vorstehenden Ansprüche;
wobei der Bolzen (8) geeignet ist, in der Öffnung (16) der in der Schließposition angeordneten Sperre (20) festgehalten zu werden, wenn der Sitz (1) in der umgeklappten Position oder der hochgestellten Position angeordnet ist; und
einen Steuermechanismus (13), der selektiv betätigt werden kann, um die Klinke (21) und daher den Hebel (35) von der Sperre (20) wegzubewegen, wodurch die Sperre (20) die Öffnungsposition einnehmen und der Sitz (1) in der anderen Position aus der umgeklappten Position und der hochgestellten Position angeordnet werden kann.

14. Verfahren zur Bedienung einer Verriegelung (10) für einen Sitz (1) eines Kraftfahrzeugs (2), das die Schritte aufweist:
Bewegen einer Sperre (20) der Verriegelung (10) aus einer Öffnungsposition, in der die Sperre (20) Einrücken eines Bolzens (8) in eine Öffnung (16) der Sperre (20) und Ausrücken daraus ermöglicht, und einer Schließposition, in der die Sperre (20) den Bolzen (8) in der Öffnung (16) hält, wobei die Sperre (20) einen ersten und einen zweiten Zahn (22, 23) aufweist, die die Öffnung (16) auf jeweiligen Gegenseiten der Öffnung (16) begrenzen;
Bewegen einer Klinke (21) um eine Achse (C) zwischen einer entkoppelten Position, in der die Klinke (21) die Bewegung der Sperre (20) aus der Schließposition in die Öffnungsposition ermöglicht, und einer gekoppelten Position, in der die Klinke (21) mit der Sperre (20) gekoppelt ist, zum Halten der Sperre (20) in der Schließposition und Verhindern von Ausrücken des Bolzens (8) aus der Öffnung (16); und
Bewegen eines Hebels (35) zwischen einer ersten Position, in der der Hebel (35) mit der Sperre (20) gekoppelt ist, um die Sperre (20) in der Schließposition zu blockieren, um so Überlaufbewegung der Sperre (20) weg von der Klinke (21) zu begrenzen; und einer zweiten Position, in der der Hebel (35) von der Sperre (20) entkoppelt ist, um so der Sperre (20) zu ermöglichen, Überlauf in der Schließposition zu vollführen;
**dadurch gekennzeichnet, dass** es den Schritt des Steuerns des Hebels (35) und der Klinke (21) auf solche Weise aufweist, dass der Hebel (35) und die Klinke (21) mit demselben zweiten Zahn (23) der Sperre (20) zusammenwirken, wenn die Sperre (20) in der Schließposition angeordnet ist;
wobei der zweite Zahn (23) aufweist:
eine erste Oberfläche (29a), die die Öffnung (16) seitlich begrenzt und mit der Klinke (21) zusammenwirkt, wenn die Sperre (20) im Gebrauch in der Schließposition angeordnet ist; und
einen Schlitz (28), in den der Hebel (35) einrückt, wenn der Hebel (35) in der ersten Position angeordnet ist und die Sperre (20) im Gebrauch in der Schließposition angeordnet ist;
wobei der Schlitz (28) nach der Oberfläche (29a) gemäß der Vorwärtsdrehrichtung der Sperre (20) aus der Öffnungsposition in die Schließposition angeordnet ist; und
der Schlitz (28) durch eine zweite Oberfläche (30b) des zweiten Zahns (23) gebildet ist.

## Revendications

1. Dispositif de blocage (10) pour un siège (1) d'un véhicule automobile (2), comprenant un ensemble de fermeture (12) adapté pour coopérer avec une gâche de blocage (8) ; ledit ensemble de fermeture (12) comprenant :
- un rochet (20) qui peut prendre une position d'ouverture, dans laquelle ledit rochet (20) permet un enclenchement et un désenclenchement entre ladite gâche de blocage (8) et une ouverture (16) dudit rochet (20), et une position de fermeture, dans laquelle ledit rochet (20) maintient ladite gâche de blocage (8) au sein de ladite ouverture (16) ; ledit rochet (20) comprenant des première et seconde dents (22, 23) délimitant ladite ouverture (16) sur des côtés opposés respectifs de ladite ouverture (16) ;
- un cliquet (21) mobile entre une position désaccouplée dans laquelle ledit cliquet (21) permet le déplacement dudit rochet (20) de ladite position de fermeture à ladite position d'ouverture, et une position couplée, dans laquelle ledit cliquet (21) est couplé avec ledit rochet (20) pour retenir ledit rochet (20) dans ladite position de fermeture et empêcher un désenclenchement de ladite gâche de blocage (8) du siège (6) ; et
- un levier (35) qui peut être déplacé entre :
une première position, dans laquelle ledit levier (35) est couplé audit rochet (20) pour bloquer ledit rochet (20) dans ladite position de fermeture, de façon à limiter un déplacement de dépassement de course dudit rochet (20) en éloignement du cliquet (21), lorsque ledit rochet (20) est placé dans la position de fermeture ; et
une seconde position dans laquelle ledit levier (35) est désaccouplé dudit rochet (20), de façon à permettre audit rochet (20) un dépassement de course dans ladite position de fermeture ;
**caractérisé en ce que** ledit levier (35) et ledit cliquet (21) coopèrent avec une même seconde dent (23) dudit rochet (20), lorsque ledit rochet (20) est agencé dans ladite position de fermeture ;
ladite seconde dent (23) comprenant :
- une première surface (29a), qui délimite latéralement ladite ouverture (16) et coopère avec ledit cliquet (21) lorsque ledit rochet (20) est agencé, en utilisation, dans ladite position de fermeture ; et
- une fente (28) qui est enclenchée par ledit levier (35), lorsque ledit levier (35) est agencé dans ladite première position et ledit rochet (20) est agencé, en utilisation, dans ladite position de fermeture ;
ladite fente (28) étant agencée en aval de ladite surface (29a) en procédant selon la direction de rotation d'avancement dudit rochet (20) de ladite position d'ouverture à ladite position de fermeture ;
ladite fente (28) étant définie par une seconde surface (30b) de ladite seconde dent (23).

2. Dispositif de blocage selon la revendication 1, **caractérisé en ce que** ladite première dent (22) est adaptée pour bloquer ledit rochet (20) dans ladite position de fermeture.

3. Dispositif de blocage selon la revendication 1 ou 2, **caractérisé en ce que** ladite seconde surface (30b) de ladite seconde dent (23) est transversale à ladite première surface (29a).

4. Dispositif de blocage selon l'une quelconque des revendications précédentes, **caractérisé en ce que** ledit rochet (20) comprend un surmoulage (40) qui définit ladite fente (28).

5. Dispositif de blocage selon l'une quelconque des revendications précédentes, **caractérisé en ce que** ledit levier (35) est mobile de ladite première position à ladite seconde position solidairement et conjointement audit cliquet (21), lorsque ledit cliquet (21) s'éloigne, en utilisation, dudit rochet (20).

6. Dispositif de blocage selon la revendication 5, **caractérisé en ce que** ledit levier (35) est mobile dans un plan entre ladite première position et ladite seconde position ;
ledit levier (35) comprenant :
- un corps principal (36) se trouvant dans ledit plan et comprenant une portion (38) qui est adaptée pour coopérer avec ladite fente (28) dudit rochet (20) lorsque ledit rochet (20) est placé dans ladite position de fermeture ; et
- une protubérance (39) faisant saillie à partir dudit corps principal (36) transversalement vers ledit plan et définissant une surface de butée (42) pour ledit cliquet (21), lorsque ledit cliquet (21) se déplace, en utilisation, en éloignement dudit rochet (20) agencé dans ladite position de fermeture.

7. Dispositif de blocage selon la revendication 6, **caractérisé en ce que** ladite portion (38) du corps principal (36) définit une extrémité libre (38) dudit levier (35) et est en forme de crochet, lequel est excentrique par rapport à l'axe (C).

8. Dispositif de blocage selon la revendication 6 ou 7, **caractérisé en ce que** ledit levier (35) peut être mis en rotation autour d'un axe (C) ; et **en ce que** ladite protubérance (39) est intercalée entre ledit axe (C) et ladite extrémité libre (38).

9. Dispositif de blocage selon l'une quelconque des revendications 6 à 8, **caractérisé en ce que** ledit cliquet (21) est agencé sur un côté et à une certaine distance dudit corps principal (36).

10. Dispositif de blocage selon l'une quelconque des revendications 7 à 9, **caractérisé en ce que** ladite extrémité libre (38) s'étend à une première distance radiale dudit axe (C) ;
ledit cliquet (21) ayant une surface (47) coopérant avec ladite dent (23) dudit rochet (20) dans ladite position de fermeture de celui-ci ;
ladite surface (47) s'étendant à une seconde distance radiale dudit axe (C), qui est plus petite que ladite première distance radiale.

11. Dispositif de blocage selon la revendication 10, **caractérisé en ce qu'**il comprend :
- un premier moyen élastique (45) destiné à charger élastiquement ledit levier (35) vers ladite première position ; et
- un second moyen élastique (25) destiné à charger élastiquement ledit cliquet (21) vers ledit rochet (20) ;
et/ou **en ce que** ledit cliquet (21) et ledit levier (35) peuvent être mis en rotation autour du même axe (C).

12. Dispositif de blocage selon la revendication 11, **caractérisé en ce qu'**il comprend un bâti, qui, quant à lui, comprend une douille (24) qui s'étend autour dudit même axe (C) ;
ledit cliquet et ledit levier (21, 35) étant supportés avec faculté de rotation par ladite douille (24) autour dudit même axe (C).

13. Véhicule automobile (2), comprenant :
- un siège (1) sélectivement mobile entre une position rabattue et une position relevée ;
- un dispositif de blocage (10) selon l'une quelconque des revendications précédentes ;
- ladite gâche de blocage (8) étant adaptée pour être retenue dans ladite ouverture (16) dudit rochet (20) agencé dans ladite position de fermeture, lorsque ledit siège (1) est agencé dans l'une de ladite position rabattue et de ladite position relevée ; et
- un mécanisme de commande (13) qui peut être sélectivement actionné pour éloigner ledit cliquet (21) et, ainsi, ledit levier (35) dudit rochet (20), permettant ainsi audit rochet (20) de prendre ladite position d'ouverture et audit siège (1) d'être agencé dans l'autre de ladite position rabattue et de ladite position relevée.

14. Procédé d'exploitation d'un dispositif de blocage (10) pour un siège (1) d'un véhicule automobile (2) comprenant les étapes de :
- déplacement d'un rochet (20) dudit dispositif de blocage (10) entre une position d'ouverture, dans laquelle ledit rochet (20) permet un enclenchement avec et un désenclenchement d'une gâche de blocage (8) et une ouverture (16) dudit rochet (20), et d'une position de fermeture, dans laquelle ledit rochet (20) maintient ladite gâche de blocage (8) au sein de ladite ouverture (16), ledit rochet (20) comprenant une première et une seconde dent (22, 23) délimitant ladite ouverture (16) sur des côtés opposés respectifs de ladite ouverture (16) ;
- déplacement d'un cliquet (21) entre une position désaccouplée dans laquelle ledit cliquet (21) permet le déplacement dudit rochet (20) de ladite position de fermeture à ladite position d'ouverture, et une position couplée, dans laquelle ledit cliquet (21) est couplé audit rochet (20) pour maintenir ledit rochet (20) dans ladite position de fermeture et empêcher un désenclenchement de ladite gâche de blocage (8) de ladite ouverture (16) ; et
- déplacement d'un levier (35) entre une première position, dans laquelle ledit levier (35) est couplé audit rochet (20) pour bloquer ledit rochet (20) dans ladite position de fermeture, de façon à limiter le déplacement de dépassement de course dudit rochet (20) en éloignement du cliquet (21) ; et une seconde position dans laquelle ledit levier (35) est désaccouplé dudit rochet (20), de façon à permettre audit rochet (20) un dépassement de course dans ladite position de fermeture ;
**caractérisé en ce qu'**il comprend l'étape de commande dudit levier (35) et dudit cliquet (21) de telle sorte que ledit levier (35) et ledit cliquet (21) coopèrent avec une même seconde dent (23) dudit rochet (20), lorsque ledit rochet (20) est agencé dans ladite position de fermeture ;
ladite seconde dent (23) comprenant :
- une première surface (29a), qui délimite latéralement ladite ouverture (16) et coopère avec ledit cliquet (21) lorsque ledit rochet (20) est agencé, en utilisation, dans ladite position de fermeture ; et
- une fente (28) qui est enclenchée par ledit levier (35), lorsque ledit levier (35) est agencé dans ladite première position et ledit rochet (20) est agencé, en utilisation, dans ladite position de fermeture ;
ladite fente (28) étant agencée en aval de ladite surface (29a) en procédant selon la direction de rotation d'avancement dudit rochet (20) de ladite position d'ouverture à ladite position de fermeture ;
ladite fente (28) étant définie par une seconde surface (30b) de ladite seconde dent (23).
